(19) Europäisches Patentamt
European Patent Office
Office européen des brevets

(11) **EP 2 535 782 A1**

(12) **EUROPEAN PATENT APPLICATION**

(43) Date of publication:
**19.12.2012 Bulletin 2012/51**

(51) Int Cl.:
**G05D 22/02** *(2006.01)*    **E04B 1/70** *(2006.01)*
**F26B 25/22** *(2006.01)*

(21) Application number: **12183815.5**

(22) Date of filing: **06.08.2009**

| | |
|---|---|
| (84) Designated Contracting States:<br>**AT BE BG CH CY CZ DE DK EE ES FI FR GB GR<br>HR HU IE IS IT LI LT LU LV MC MK MT NL NO PL<br>PT RO SE SI SK SM TR**<br><br>(30) Priority: **19.08.2008  IT MI20081522**<br><br>(62) Document number(s) of the earlier application(s) in<br>accordance with Art. 76 EPC:<br>**09167412.7 / 2 157 491**<br><br>(27) Previously filed application:<br>**06.08.2009 EP 09167412** | (71) Applicant: **Leonardo Solutions S.r.l.**<br>**20025 Legnano (IT)**<br><br>(72) Inventor: **Campo, Antonino**<br>**21028 Travedona Monate (Varese) (IT)**<br><br>(74) Representative: **Tirloni, Bartolomeo**<br>**Bugnion S.p.A.**<br>**Viale Lancetti, 17**<br>**20158 Milano (IT)**<br><br>Remarks:<br>This application was filed on 11-09-2012 as a<br>divisional application to the application mentioned<br>under INID code 62. |

(54) **System for dehumidifying walls**

(57)    System for dehumidifying walls comprising a plurality of apparatuses (2) for dehumidifying walls incorporating wall-dehumidifying means (3) that is active for promoting the dehumidification of at least a portion of wall and at least a monitoring unit (4) that is active on said wall-dehumidifying means (3) to enable operation to be monitored. The apparatuses (2) for dehumidifying walls further comprise selecting means (10) for setting an apparatus (2) such as master and setting the other apparatuses (2) as slave apparatuses, the master apparatus (2) communicating with one or more slave apparatuses (2) directly slaved to the master apparatus (2).

FIG 2

## Description

The object of the present invention is a system for monitoring and/or dehumidifying walls.

In particular, the system that is the object of the invention consists of a plurality of different devices that together concur in the objective of dehumidifying the walls and keeping the state of health thereof under observation.

As is known, today, numerous solutions are used in the field for dehumidifying walls, some of which are extremely invasive, like ventilation holes at the base of the walls, injections of chemical barriers, the application of particular porous plasters or yet others.

Non-invasive solutions have also spread such as microwave dehumidifying systems, absorption dehumidification or also electrophysical dehumidification.

Merely by way of example, a device is known from European Patent No. EP 928856 for dehumidifying and desalinating buildings in which a preset number of electromagnetic pulses are generated that act on the ions and on the salts dissolved in the water/humidity contained in the walls, promoting the migration of the latter ions to a return electrode that is generally placed on the ground and outside the building to be treated.

A microcontroller is able to receive a plurality of signals coming from sensors arranged at the wall to be treated to analyse the signals and send corresponding command and control signals to the emission reel or to the return electrode to vary the distance between the pulses or the potential difference from the electrode so as to modify the intensity of the intervention.

In addition to the apparatus mentioned briefly above, it should be noted that some methods also exist today that enable the results reached with the dehumidification methods mentioned to be monitored; such methods nevertheless entail certain problems, both of an economic nature (detecting with infrared cameras) and on the other hand caused by the use of intrusive methods (removing parts of walls to subject the parts to laboratory examinations), or linked to the unreliability of the measurements of the resistivity of parts of wall that are today conducted with the few instruments available.

In addition to the above, there is the difficulty or poor repeatability of the measurements over time whilst maintaining the preceding operating conditions.

In the field of monitoring dehumidifying systems the contents of patent US 7173538 should be remembered that discloses a system that is able to generate information relating to a dehumidifying procedure and sending the information to a user via a suitable user interface.

In particular this system is able to transmit to a remote server data on the dehumidifying procedure measured by suitable sensors of various types and positioned at the structure to be treated, for example by exploiting Internet connections.

Following the request, which is also received via a transmission network from a user interface, the server transmits the information on the dehumidification procedure, which information is displayed and appropriately reprocessed via the user interface.

The analysis of the transmitted data enables the user to check the state of progress of the work and, by studying the sent data, to devise new intervention procedures that are more suitable for resolving the problems as they occur.

In this situation the technical task of the present invention is substantially to overcome all the mentioned drawbacks.

In particular, a main object of the invention is to set up a coordinated system for monitoring and dehumidifying walls that is able to ensure optimum interventions on the affected walls of the building that are checkable in a accurate and repeatable manner. It is also an object of the wall monitoring and dehumidification system to enable the dehumidification procedures to be optimised in function of the chemical and physical environmental features and also in function of the procedural and operational needs that are required of the building (presence of frescoed walls, historical buildings, behaviour of the structure, ...).

It is also an auxiliary object of the invention to provide a movable or fixed apparatus for measuring wall humidity that is able to take extremely accurate, reliable and repeatable measurements.

This and other objects that will appear more clearly in the course of the following description are substantially achieved by a system for monitoring and/or dehumidifying walls according to the appended claims.

Further features and advantages will become clearer from the detailed description of a preferred but not exclusive embodiment of a system for monitoring and/or dehumidifying walls according to the invention.

The description will be made with reference to the appended figures, which are provided only by way of example and are not therefore limiting, in which:

- figure 1 shows a system for monitoring and dehumidifying walls according to the invention in a schematic and exemplifying form;
- figure 2 shows an apparatus for dehumidifying walls that is usable in the system in figure 1;
- figure 3 illustrates a schematic view of an apparatus for manually detecting humidity that is usable in the system in figure 1;

- figures 3a and 3b respectively illustrate the external appearance of the apparatus in figure 3 and the use thereof during measuring of the humidity of a wall;
- figure 3c illustrates an example of a sequence of signals that are adoptable for determining the position of the apparatus for manually detecting humidity during the operation thereof;
- figure 4 shows a wall-humidity sensor installed in a fixed manner which is usable in the system in figure 1;
- figure 5 shows the main circuit for measuring the capacitive variations of the humidity sensors, and
- figures 5a and 5b show diagrams that are suitable for explaining the operation of the circuit in figure 5. With reference to the quoted figures, 1 comprehensively indicates a system for monitoring and/or dehumidifying walls according to the invention.

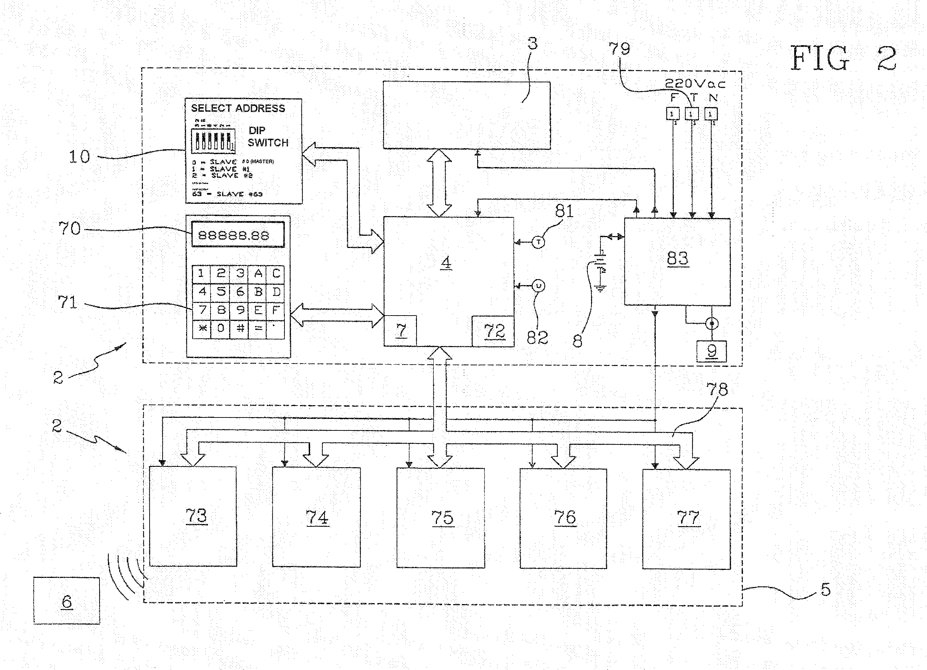

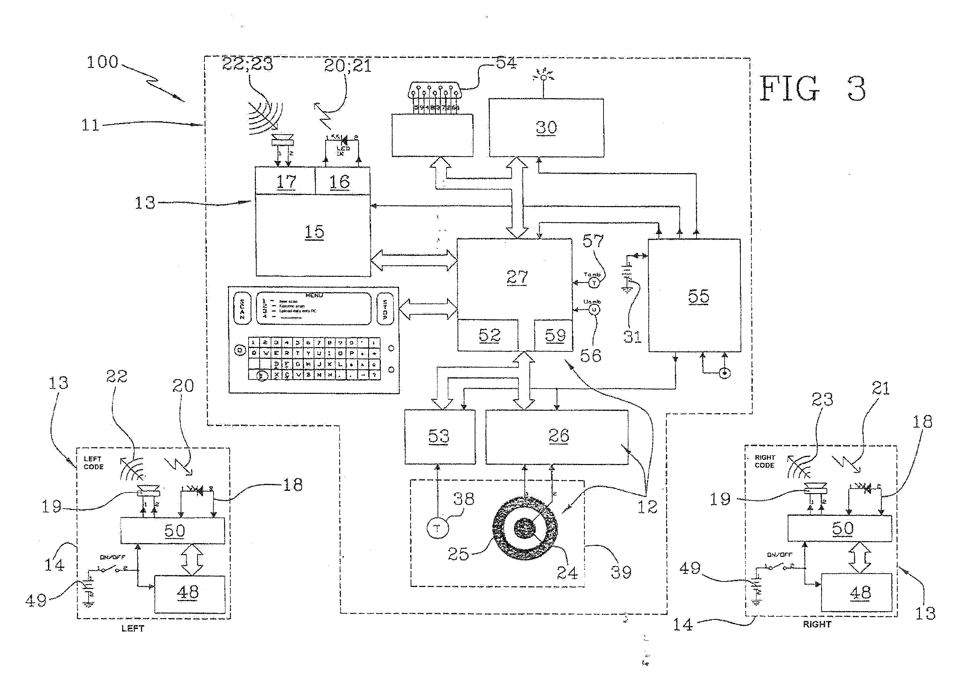

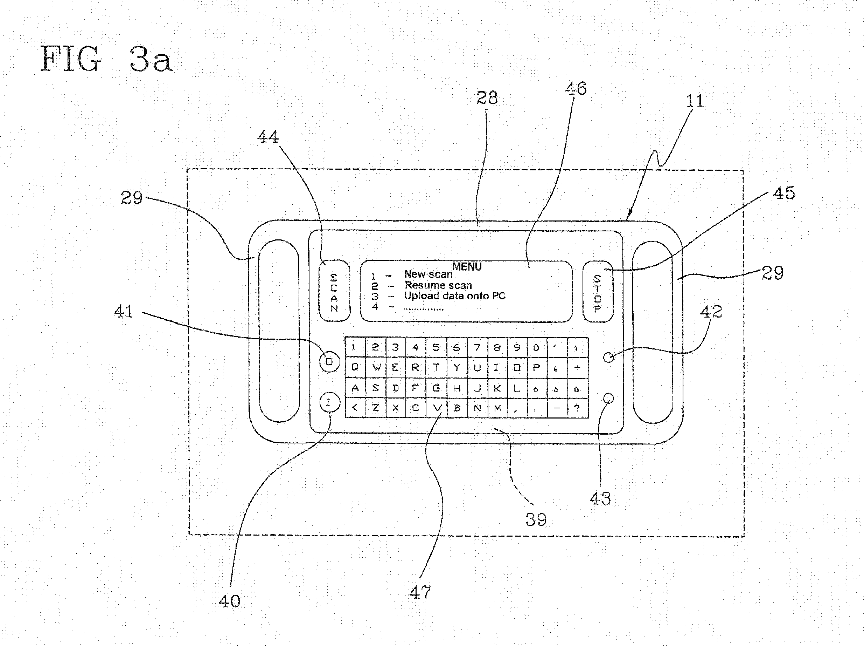

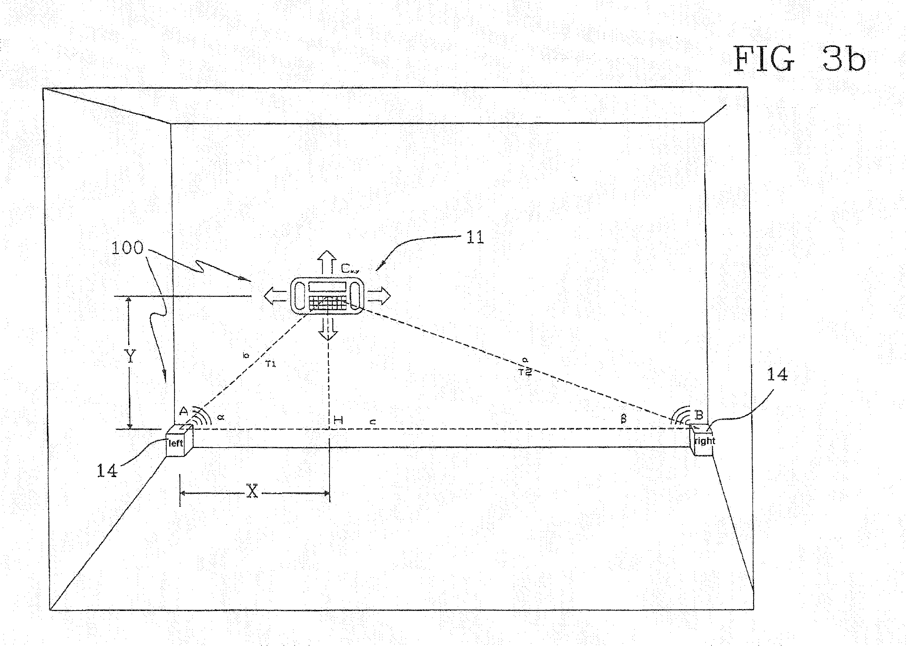

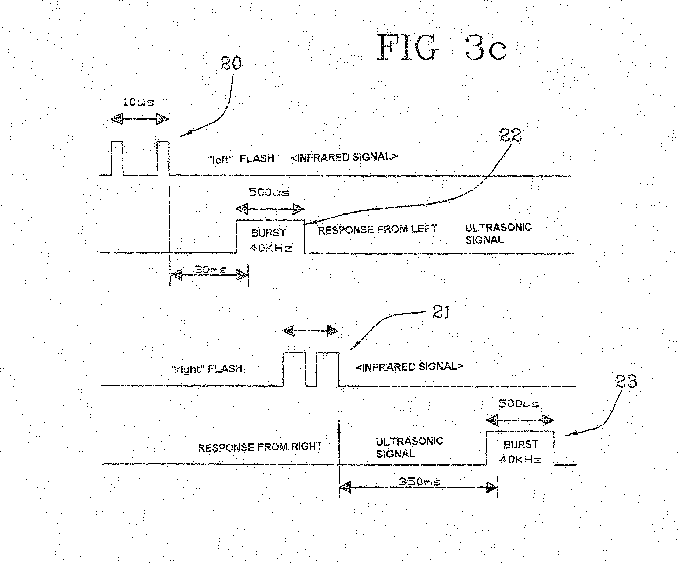

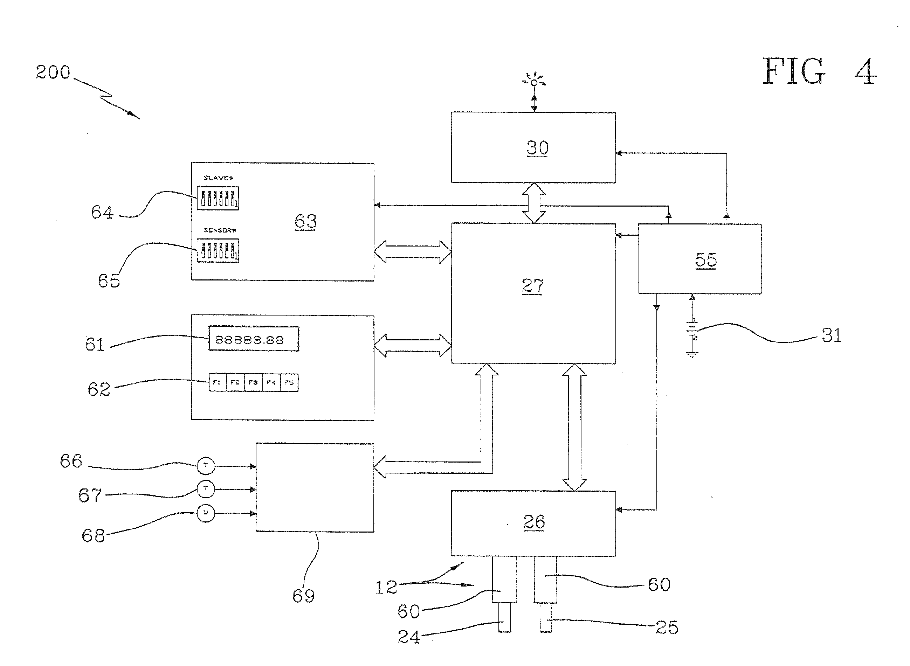

The system disclosed below consists of three different elements (each of which could be present in a number greater than one) and precisely of an electronic apparatus 2 for dehumidifying walls that is based on the electromagnetic or electrophysical principle (figure 2) of a portable electronic apparatus 100 for detecting wall humidity (figure 3) and of a fixed-installation electronic apparatus 200 for detecting wall humidity (figure 4).

The three apparatuses mentioned can be seen as devices in their own right with autonomous functions to be used singularly in well circumscribed circumstances but if used together they represent three subsystems of a modern and sought-after system for dehumidifying walls. The structure 2 for dehumidifying walls is illustrated in figure 2.

The structure 2 also comprises a means for dehumidifying walls 3 that is active for promoting the dehumidification of at least a wall portion.

In general, such a dehumidifying means 3 is an electromagnetic dehumidifying means comprising at least a solenoid valve traversed by a wave-shaped current with a particular and preset amplitude and frequency.

The electromagnetic wave produced by the solenoid valve spreads in the surrounding space, modifying the behaviour of the water that rises by capillarity inside the walls.

The action on the surface tension of the water is such as to reduce or eliminate the well-known rising effect. Natural evaporation is added to the reduction or elimination of rising by capillarity such that the wall dries and is consequently cured.

The action of the apparatus 2 extends for a range of some metres around the installation point.

Still observing figure 2, the presence of at least a monitoring unit 4 is noted that is active on the dehumidifying means 3 to enable the operation thereof to be monitored.

Suitable sensors such as an ambient temperature probe 81 and an ambient humidity probe 82 are slaved to the monitoring logic unit or microprocessor 4.

It should be noted that the monitoring logic unit 4 is able to modify/adjust the monitoring parameters of the solenoid valve in a substantially continuous manner in order to modulate the efficacy of the intervention and of the dehumidification.

In particular, the monitoring unit 4 is active on the wall-dehumidifying means 3 to vary the operating parameters thereof, for example by limiting or interrupting the operation thereof. For this purpose, the apparatus 2 comprises a memory 7 containing at least a desired dehumidifying profile and the monitoring unit 4 is active on the wall-dehumidifying means 3 to monitor the wall-dehumidifying means 3 in function of the set dehumidification profile.

In other words, it may be necessary to maintain precise monitoring of the dehumidification profile in order to avoid, for example, the peeling-off of frescoed surfaces that could be caused by too rapid dehumidification.

Through the presence of a function keyboard 71 and of a corresponding display 70 the apparatus 2 can be set by indicating the use of a particular sensor 200 (disclosed below) to be used as a feedback element to implement the monitoring of the dehumidifying profile that has just been mentioned.

Obviously, still owing to the aforementioned input/output means 71, 70 the data of the profile can be set or modified by intervening directly on the apparatus 2.

Advantageously, then at least one of the plurality of apparatuses 2 that are usable in the system (but also all the apparatuses) has a communication module 5 that is suitable for at least receiving instructions from a remote unit 6 (such as, for example, a computer connected to the Internet or connected in another wireless manner to the aforementioned communication module 5).

The instructions are sent to the monitoring unit 4 to modify the operating modes of the apparatus 2 for dehumidifying walls.

Such changes may consist of both a change to the operation of the means for dehumidifying walls, for example limitation thereof or interruption to operation, or may also be instructions to modify the dehumidifying profile stored in the memory 7 that the monitoring logic unit follows during the dehumidifying procedure.

It should then be noted that the communication module 5 is also suitable for transmitting information to the remote unit 6 relating to the operation of the apparatus 2.

The information can, for example, relate to interrupting the supply, faults of different types or also operating data on the apparatus such as the set dehumidifying profile or the detected ambient temperatures and humidity and the charge level of the buffer battery.

The communication module 5 can further transmit both at the request of the remote unit 6 and automatically when preset events occur such as exceeding preset alarm thresholds or also the elapsing of preset times.

In general, the communication module comprises a plurality of different modules having different functions.

A remote wireless communication module 73 is above all present, for example a GSM module for sending and receiving data and instructions to and from the remote unit 6.

A wireless module 74, for example a bidirectional module, can also be provided, in order to connect with the sensors or the apparatuses 200 for detecting wall humidity.

Optionally, a standard physical connection module 75 can be provided for connecting via cable to a PC or a terminal, for example an RS232/422 module.

A Bluetooth module 76 can be further provided for standard connection to various further devices, which are also provided with a Bluetooth communication module.

Other communication modules that are not shown can equally be used or provided, for example an IRDA (Infrared Data Association) communication module for infrared data transmission.

Lastly, an expansion slot 77 of standard type can also be provided.

All the modules 73, 74, 75, 76 and 77 will be slaved to a reading/writing and monitoring bus 78 that is directly in communication with the monitoring logic unit 4.

It is clear that owing to the presence of the communication module 73 it is possible to effect the remote monitoring of the dehumidification system but also to make some changes to the behaviour thereof.

By analysing the acquired data, it can be decided to modify the previously set dehumidification profile, moreover the apparatus 2 can inform the remote data gathering station of operating irregularities such as lack of power, empty batteries, faults, etc or also of the malfunction of one or more of the slaved wall sensors 200.

Still observing figure 2, the presence of at least a rechargeable battery 8, for example a rechargeable lithium battery, is noted.

The rechargeable battery 8 is slaved to a battery-charging unit 83 that also acts as a distribution unit for distributing supplies by in particular supplying the electromagnetic dehumidifying unit 3, the monitoring logic unit 4 and the various modules 73, 74, 75, 76 and 77 of the communication module 5.

Obviously, connecting to a fixed supply 79 but also the optional possibility of supply via one or more solar panels 9 is provided.

It is in fact possible to connect a small solar panel 9 as a source of supply, for example in cases in which a mains power point is not available for the connection 79.

The system for monitoring and dehumidifying walls further comprises an apparatus (100) for detecting humidity at a given depth inside the wall, acting independently of the constituting material and of the type of construction of the wall.

In general, the apparatus (100) is a portable device that enables wall humidity to be detected in depth at the resting point on the wall.

The measuring technique, as will be better explained below, is based on detecting the dielectric constant of the material on which the device rests: the presence of water in fact causes a noticeable increase in the total value of the dielectric constant.

As it is possible to note in figures 3, 3a and 3b, the apparatus 100 further comprises a movable unit 11 defined by a box casing 28 that has at least one, and preferably two, lateral manual gripping members 29 that are suitable for permitting scanning movement along the wall surface 38.

As is visible in particular in figures 3a and 3b, the gripping members are ring-shaped and arranged laterally on the movable unit 11 so that the scanning apparatus 100 can be grasped with both hands and a rear surface 39 thereof can rest on the wall surface 38 on which to conduct the detecting; the unit is then moved on the wall according to any direction, as shown by the arrows in figure 3b.

Still observing the external appearance of the device shown in figure 3a, the presence of an "on" switch 40 and an "off" switch 41 of the device is noted as is a luminous warning light 42 warning that the battery is low and a luminous warning light 43 warning that scanning is in progress.

In addition to the aforesaid "on" and "off" switches 40, 41, there are also two switches, a scanning start switch 44 and a scanning stop switch 45.

As can be noted, such switches are arranged at the gripping members 29 in such a manner that it is possible to activate or stop the manually commanded detecting of humidity without removing any hand from the gripping member.

In this connection the advantage is clear of having positioned at least the scanning start switch (and/or scanning stop switch) near the gripping member 29 so as to be able to operate it easily with the thumb.

The movable unit 11 is further provided with a suitable display for displaying a menu of possible operations, i.e. scanning data that exist or are detected by the sensors, as will be explained better.

It should then be noted how the apparatus 100 is advantageously provided with means 13 for detecting scanning coordinates that are suitable for determining the position of the movable unit 11 at least during detecting of humidity.

Suitable means 12 for determining the wall humidity explained in greater detail below cooperates conjointly with such means 13 for detecting scanning coordinates. In other words, owing to the portability and practicality of use thereof, it is possible to conduct with rapidity a great number of measurements in order to enable the current state of wall humidity to be evaluated rapidly and accurately.

The apparatus 100 thus enables a humidity profile to be detected that is associated with the wall surface under examination, at a given depth (which can be varied) inside the wall. This in fact enables scanning on two dimensions to be conducted by sliding the sensible side (i.e. the rear surface 39) of the movable unit 11 along the wall surface 38. In fact, owing to the aforesaid means 13 for detecting the scanning coordinates it will be possible to detect the movement of the movable unit 11 along the horizontal axis X and along the vertical axis Y.

By thus referring to a preset point of the surface (reference point 0.0) it is possible to scan a particular area of the wall manually.

The instrument will store the precise humidity data, associating the humidity data with the coordinates, which are also precise.

After scanning has been terminated, the internal memory of the instrument will contain the humidity map relating to the scanned surface.

Obviously, the closer together the scanning lines the more accurate this map will be.

Obviously, when scanning has terminated, these data can be entered in a computer, which will be provided with a common display and with a microprocessor that will load a suitable software module that is suitable for displaying on the display a graphic representation of the detected humidity.

Thus by using this programme the map that has just been detected will be displayed on the screen, providing a total vision of the state of humidity present on the wall surface or at a given depth below the wall surface.

An additional software will be further present that is suitable for interpolating the detected humidity data to reconstruct the humidity profile in areas of the wall surface that are not subjected to scanning.

In other words, the software installed on the PC will also represent, through the aforesaid interpolation, possible surface pieces that have escaped detection.

It is clear that this method enables maps detected on the same wall surface at different times to be compared, enabling a good assessment of the dehumidification of the wall achieved following focussed interventions (whether they be invasive or non-invasive).

Returning to observe the representation in figure 3, it should be noted how the means 13 for detecting comprises at least a coordinates reference device 14 and in general two such devices, which are, for example, distinguishable as a left coordinates reference device and a right coordinates reference device.

In general, these devices 14 are outside the movable unit 11 and are positioned at preset distances from the scanning place in fixed reference positions (see figure 3b).

The means 13 then comprises at least a scanning coordinates detecting unit 15 that is mounted on the unit 11 and is movable with the aforesaid means 12 to determine wall humidity.

In general, the scanning coordinates detecting unit 15 cooperates with both the left coordinates reference device 14 and with the right coordinates reference device 14 to determine the correct positioning of the movable unit 11 on the scanning wall 38.

From the operational point of view, the scanning coordinates detecting unit sends a first signal 20 that is intended for the left coordinates reference device 14, which sends a corresponding response signal 22 captured by the scanning coordinates detecting unit 15. The same unit 15 sends a first signal 21 intended for the right coordinates reference device 14 that is received and responds with a response signal 23 that is in turn received by the scanning coordinates detecting unit.

Observing in particular figure 3b, a schematised perspective view of a wall is noted there in which the two left and right coordinates reference devices 14 are positioned in the bottom left and right corners whilst in the central zone of the wall the movable unit 11 is visible that can slide freely on the scanning wall 38. The distance c between the two reference devices is measured by the user and inserted into the instrument via the use of the keyboard 47.

The continuously variable distances a and b are calculated on the basis of well known geometrical theorems.

In particular, said T1 being the reception time of the pulse transmitted by the left coordinates reference device 14 and T2 being the reception time of the pulse transmitted by the right device 14, the distance a will be equal to 332 m/s (speed of sound) multiplied by the time T2, whilst b will be the same as the speed of sound by the time T1.

After the positioning coordinates X and Y of the movable unit 11 have been defined as indicated in figure 3b, the following relationships will apply:

$X = b \cos\alpha;$
$Y = b \sin\alpha;$

By applying Carnot's theorem:

$$\alpha = \text{arcos}\ (b^2 + c^2 - a^2)/2bc \text{ is obtained.}$$

Returning to the representation of figure 3, it should be noted how the scanning coordinates detecting unit 15 comprises at least a transmitter 16, preferably an infrared transmitter and at least a receiver 17 and preferably an ultrasound receiver.

Correspondingly, the coordinates reference device 14 (whether left or right) comprises at least a receiver 18 and preferably a photodiode, and at least a transmitter 19, preferably an ultrasound transmitter. The transmitter 16 of the detecting unit 16 emits a first signal 20 received by the receiver 18 of the reference device 14, for example the left device, following the reception of said first signal 20, the transmitter 19 of the left reference device 14 emits a response signal 22 received by the receiver 17 of the scanning coordinates detecting unit 15.

The same operation is then conducted with reference to the right coordinates reference device 14.

The transmitter 16 emits a first signal 21 received by the receiver 18 that, following reception, transmits a response signal 23 via the transmitter 19 received by the receiver 17 of the scanning coordinates detecting unit 15.

In this manner the aforementioned quoted times T1 and T2 can be calculated.

In other words, when the apparatus 100 wants to know the coordinates of the point at which it is about to detect wall humidity, it emits an infrared coded flash through an infrared diode emitter 16 that is suitably arranged on the body of the movable unit 11 so that it is visible by the coordinates reference devices 14.

In figure 3c there is shown the emission of the aforesaid infrared coded flash or first signal 20 intended for the left coordinates reference device.

The suitably coded signal 20 will thus activate the response of the left coordinates reference device 14 that, once the code assigned to it has been received, immediately emits a burst at ultrasonic frequency.

This burst is captured by a receiving ultrasonic capsule 17 and on the basis of the time taken to receive this burst the coordinates detecting unit will calculate the distance from the interrogated reference device.

Figure 3c also displays the infrared coded flash intended for the right coordinates reference device indicated by the reference 21.

As is known, following reception of this infrared signal the burst or ultrasonic signal 23 is emitted.

The process of identifying the coordinates lasts about 50 ms, which means that it is possible to have a reading resolution that is equal to a centimetre if the instrument runs on the wall at a speed of 20 cm/s. With relation to the coordinates reference devices 14, it is noted how the coordinates reference devices 14 have a substantially identical architecture.

The device is managed by a small microcontroller 48 that is necessary for performing the functions of decoding the first signal 20, 21 and by generating the response signal 22, 23 at an ultrasonic frequency.

The microcontroller 48 is supplied by a battery 49 and has only one on/off switch to activate the microcontroller 48.

Obviously, the microcontroller 48 will manage a unit for transmitting the ultrasonic pulse 50.

As mentioned above, the movable unit has means 12 for determining wall humidity.

In particular, such means comprises above all at least two measuring electrodes 24, 25 that define a capacitance meter.

The electrodes are in particular flat electrodes in general comprising a central flat electrode 24 and an annular flat electrode 25 arranged around the central electrode; further, the electrodes are arranged at the surface 39 of the movable unit 11 that is intended to come into contact with the wall surface 38 to be analysed.

The electrodes 24, 25 can be obtained by pressing (for example copper on Teflon) by the technique used for constructing printed circuits.

It is useful to use the Teflon, as it is not hygroscopic and is sufficiently slippery in contact with the wall surface (Teflon on the exterior in contact with the wall, copper inside the instrument). Obviously, alternatively to Teflon, it is possible to use other materials with equivalent features, i.e. materials that are not hygroscopic and are sufficiently self-lubricating.

Still observing figure 3, the presence of at least a reading unit 26 for reading the electric capacity between the two electrodes 24, 25 is noted.

The reading unit 26 is in fact a signal conditioner that is able to convert the measured capacity into voltage by exploiting phase-shift bridge technology. For the measuring bridge 32 used in the movable unit 11 the measured parameter is a phase shift between vectors.

This phase shift, owing to an electronic circuit, gives rise to direct voltage that is directly proportional thereto.

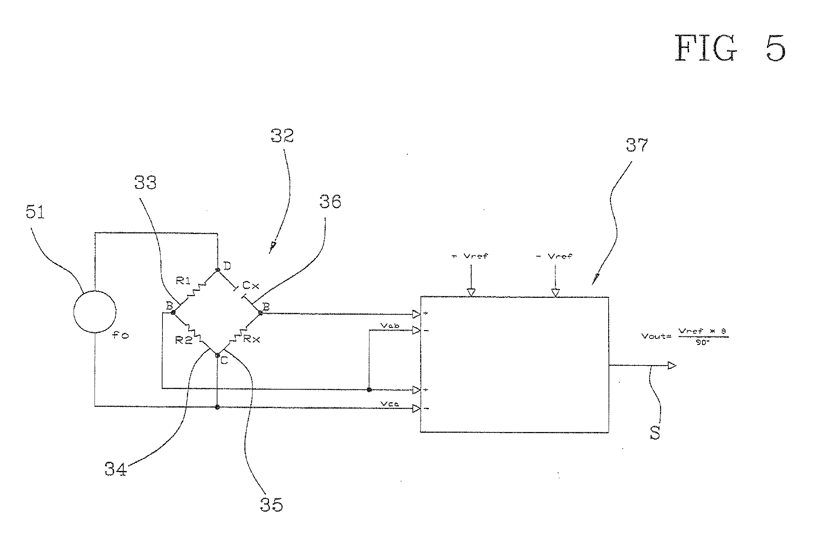

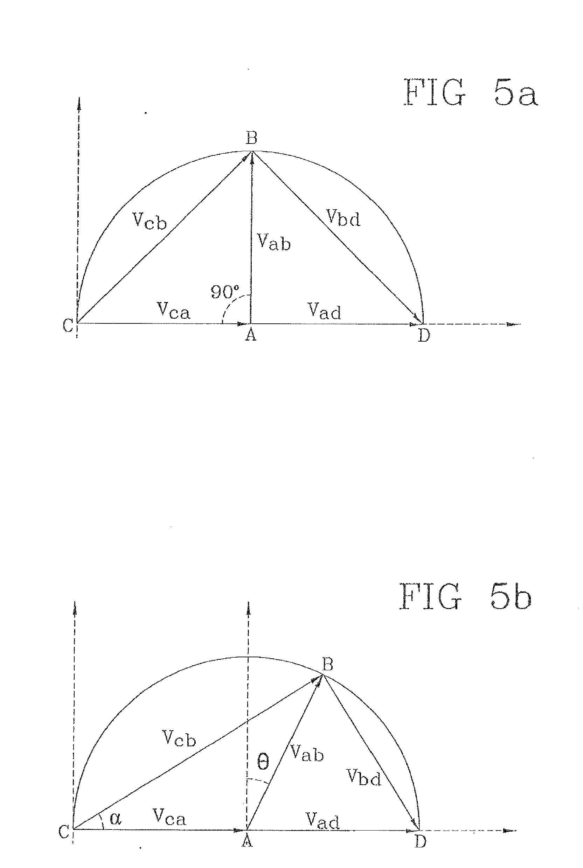

As is visible in the appended figure 5, the measuring bridge 32 has suitable resistances R1, R2 and $R_x$ on at least three branches 33, 34, 35 and, on a fourth branch 36, a capacity $C_x$, the armatures of which are in fact defined by the measuring electrodes 24, 25.

The capacity variations of the capacitor *Cx* located in a side of the bridge produce as many phase variations between the vectors carrying voltage that are located on the terminals C-D and on the terminals A-B.

By supplying the phase shift bridge with a frequency signal $F_0$ (less than the dielectric relaxation) and by using at least a phase comparator 17 that is electrically connected to the input to the measuring bridge 32 it is possible to obtain an outlet signal S that indicates the capacity variation *Cx* for the purposes of determining wall humidity.

In particular, the phase comparator is able to measure a phase relation between the vectors $V_{ca}$ and $V_{ab}$.

This phase comparator circuit 37 will provide a nil outlet voltage value when the two vectors are arranged at 90° whilst it will provide a voltage value equal to $V_{ref}$ when the two vectors are arranged at 0° (extreme case).

For all the intermediate phase shifts there will be a conversion of $V_{ref}$ linear type which is the (full scale) reference voltage supplied to the comparator circuit 37 to make the voltage/phase conversion in the most appropriate ratio.

For ease of discussion, R1 = R2 is chosen (in all cases it is possible to choose R1 ≠ R2).

$C_x$ is inserted into the branch B-D and $R_x$ is inserted into the branch C-B.

$C_x$ and $R_x$ can change position without modifying the following discussion.

Hereinafter *Cx* will be defined as the capacity value around which the measuring instrument will have to detect the deviations.

Before carrying out the measurement of the capacity variations, it will be necessary to bring the bridge into equilibrium and this is obtained by choosing for $R_x$ a value equal to $X_{cx}$ (the capacitive reactance of $C_x$).

Figure 5a that is shown discloses the arrangement of the vectors present in the circuit of the phase shift bridge in this particular equilibrium condition.

The following vector relations can be written for this:

$$V_{cd} = V_{ca} + V_{ad} = V_{cb} + V_{bd}$$

As the vector $V_{cb}$ is in phase with the current in $C_x$, it will always be 90° ahead of $V_{bd}$ (for the sake of simplicity of exposition the leakage current $C_x$ is assumed to be nil).

As is visible in figures 5a and 5b, point B will always be positioned on the semicircle of the centre A and radius AB.

Without further modifying the value of $R_x$, during measuring and assuming the value of $C_x$ is increased by a quantity equal to $\Delta c$, a new arrangement of the vectors will be obtained.

Figure 5b shows this new circumstance in detail.

The difference compared with the previous case is the creation of an angle $\vartheta$ that is greater the greater $\Delta c$ is (nil if $\Delta c = 0$).

The new capacitive reactance is now equal to:

$$X_{(Cx+\Delta c)}$$

The angle $\alpha$ that is thus formed is equal to:

$$\alpha = (180° - 90° - \vartheta)/2 = (90° - \vartheta)/2 = arctg(V_{bd}/V_{cb}) = arctg(X_{(Cx+\Delta c)}/R_x)$$

from which is obtained:

$$X_{(Cx+\Delta c)}/R_x = tg[(90° - \vartheta)/2] = tg\alpha$$

$$\frac{1}{[\omega Rx(Cx + \Delta c)]} = tg\alpha$$

where $\omega$ is the frequency supply pulse $f_0$ of the measuring bridge from which

$$1 = \omega Rx\, tg\alpha\, (Cx + \Delta c)$$

or

$$1 = \omega Rx\, Cx\, tg\alpha + \omega Rx\, \Delta c\, tg\alpha$$

is obtained.

From which the following is obtained:

$$\Delta c = \frac{(1 - \omega Rx\, Cx\, tg\alpha)}{(\omega Rx\, tg\alpha)}$$

$$\Delta c = \frac{1}{\omega Rx\, tg\alpha} - Cx$$

since

$$X_{Cx} = Rx = \frac{1}{\omega Cx} = \frac{1}{2\pi f_0 Cx}$$

for the bridge balance condition the following is lastly obtained:

$$\Delta c = \frac{1}{2\pi f_0 Rx\, tg\alpha} - \frac{1}{2\pi f_0 Rx} = \frac{1}{2\pi f_0 Rx} \times \left(\frac{1}{tg\alpha} - 1\right)$$

This last relation tells us the value of $\Delta c$ as the supply frequency $f_0$ of the bridge, the resistive value $R_x$, and the angle $\vartheta$ intercepted by the vectors $V_{ab}$ and $V_{ca}$ are known.

The phase comparator 37 compares the phases of the two signals $V_{ab}$ and $V_{ca}$, providing at the outlet thereof direct voltage that is proportional to the angle $\vartheta$ defined as the angle between the two vectors shortened by 90°, i.e. the additional phase shift between the two vectors with respect to the balance condition of the measuring bridge in which the phase shift is 90°.

A sinusoidal oscillator 51 generates the frequency $f_0$. The variation in capacity $Cx$ enables the phase shift bridge 32 to send the appropriate input signals to the phase comparator 37.

The comparator 37 will be intended as a device with infinite input impedance, nil input capacity and nil hysteresis.

The logic port XOR supplied at +/-$V_{ref}$ will have the parameters $V_{oh}$ = + $V_{ref}$ and $V_{ol}$ = -$V_{ref}$.

After the displayed inputs have been created, the outlet signal S will be equal to:

$$V_{out} = (V_{ref} * \vartheta)/90°$$

in other words, the relation between $V_{out}$ and $\vartheta$ is linear and a direct proportionality therefore exists therebetween.

Returning to the apparatus 100 in figure 3 it is noted how also a monitoring unit 27 is present that will receive the measured electric capacity input datum or alternatively the relative humidity datum determined in function of the measured electric capacity. Simultaneously, this monitoring unit 27 will receive the corresponding position data, i.e. the data for determining the corresponding position of the means 12 for determining wall humidity.

A suitable memory 52 will then be present (for example, but not necessarily, a RAM memory that is suitable for storing the positions and the corresponding humidity values measured in particular for subsequent dispatch to a remote unit or computer.

It should then be noted how the movable unit 11 also comprises at least a heat probe 27 for accurate measuring of the wall temperature.

The temperature sensor 27 does not have to possess thermal inertia inasmuch as it has to measure the temperature whilst the instrument runs on the surface of the wall (for example at 20 cm/s).

For this purpose, an optic sensor (thermopile 53) is provided that is of the type used in portable instruments that conduct remote temperature measurements.

It is important to note how the movable unit further comprises a remote transmitting module 30 that is operationally connected to the control unit 27 to send the detected humidity data and/or the scanning coordinates data to a remote apparatus.

Simultaneously, or alternatively, a standard connector will be present for transferring data via cable to a remote unit.

This connector 54 can, for example, be an RS232/422 interface for supplying data to a computer for subsequent analysis thereof.

Obviously, there will be present at least one rechargeable battery 31, for example a lithium battery, and a corresponding battery charger 55 that will also have the function of a unit for distributing supplies to the remote transmission module 30, to the scanning coordinates detecting unit 15, to the monitoring logic unit 27 and to the thermopile 53 and to the reading unit 26.

The movable unit 11 also contains an ambient humidity sensor 56 and an ambient temperature sensor 57 in addition to the aforesaid thermal probe 58 that detects the temperature of the wall during scanning.

These devices enable the humidity map to be associated with the environmental conditions at the moment of scanning.

It should be noted how the apparatus 100 is a particular and complex measuring instrument that enables wall humidity to be measured to check the distribution of the humidity on the surface and/or inside the wall solid.

It should also be observed that, unlike all the other "electric" systems and devices that are in use today for non-invasive measuring of wall humidity, the apparatus 100 disclosed here has the following significant advantages:

- the apparatus 100 enables the humidity of the wall to be detected in a non-invasive manner not only on the surface, but also - and above all - at a certain depth inside the wall solid, thus enabling the exact amount and origin of sources and/or origins of hidden humidity to be identified (for example, infiltrations, leaks from hydraulic conduits, etc) that are not directly detectable from the surface using the conventional methods that are in use today;
- the apparatus 100 has an intrinsic degree of precision in measuring humidity that is much higher than that of the aforesaid devices that are already in use;
- measuring humidity is not minimally influenced by the possible presence of salts inside the wall (e.g. salts dissolved in the water rising or coming from the terrain on which or against which the wall rests).

By repeating the same measuring conditions at a certain frequency on the same wall surface 38 and always complying with the same measuring conditions, it is possible to check how the state of health of the wall surface 38 varies over time.

It is in fact possible to check how much a wall surface is subjected to the action of a source of humidity or how effective is the action of interventions aiming at eliminating or reducing the humidity present.

In the context of the system for monitoring and dehumidifying walls, the device is of great utility, enabling the state of health to be ascertained of the wall surface subjected to the action of the previously disclosed electromagnetic dehumidifier.

Then the presence of a real time clock 59 enables to identify, among others, the date on which the measurement was conducted.

The coordinates intercepted by the instrument together with the wall humidity parameter and the wall temperature parameter are stored in the memory 52 of the movable unit 11 and alternatively (or simultaneously) transmitted through the radiofrequency module 30 to a computer that reconstructs the wall humidity on the screen, in a sort of coloured map (resembling the thermographic map).

The system for monitoring and dehumidifying walls then also comprises at least an apparatus 200 for detecting wall humidity and in general a plurality of apparatuses 200 or fixed-installation humidity sensors (figure 4). As in the case of the movable measuring apparatus 100, also the apparatus 200 comprises a microprocessor logic monitoring unit 27 to which means 12 for determining wall humidity are slaved.

The capacitance-meter electrodes will have a length that is equal to the depth at which it is wished to perform the reading inasmuch as they are inserted into corresponding holes in the walls.

In particular, the electrodes 24 and 25 have suitable electrical screening 60 of a length that is equal to the depth at which the capacity has to be detected by the electrodes 24, 25.

On the other hand, the reading unit 26 will be in everything and for everything the same as the reading unit previously disclosed with reference to the movable unit 11.

In addition to the means 12 for determining humidity, the apparatus 200 includes a wireless subsystem or remote transmission module 30 that enables it to pass on the detected data to the apparatus 2 when requested.

In general, it is a relatively small device that is installed in a fixed manner at a pre-chosen point of the wall surface and intrudes in relation to the wall surface inasmuch as two holes have to be made therein for introducing the aforementioned electrodes 24 and 25.

In fact, such electrodes, which constitute the element that is sensible to humidity, carry out the in-depth reading.

On the body of this apparatus 200 there is the battery chamber that enables the batteries 31 to be replaced easily, for example alkaline batteries, without the need to remove the device from the application point thereof.

Obviously, the battery 31 is slaved to a supplies distribution unit 55 that is able to take energy to the remote (for example radio frequency) transmission module 30, to the monitoring logic unit 27 and to the means for determining humidity 12.

The apparatus 200 is further provided with an identifying code that enables the apparatus 200 to be identified correctly by the apparatus 1 in relation to all the other apparatuses 200 of the same type that are part of the same wall monitoring and dehumidifying system.

As is visible in figure 4, for this purpose a selecting unit 63 is present that is provided with first selectors 64 and with second selectors 65.

In particular, through the first selectors (or dip switches) it is possible to set the address of the slave assigned to the apparatus 200; on the other hand, by means of the second selectors 65 (dip switches) it is possible to select the consecutive number that identifies the sensor inside said address.

Although the best use of this device is in association with the apparatus 1 disclosed above, it is possible to use the device in an independent manner; in fact through a small display 61 positioned on the body, the humidity value detected thereby on the application point can be observed.

Owing to the presence of a functional keypad 62 it will be possible to choose also the parameter to be displayed on the display 61 (for example wall humidity, ambient humidity, wall temperature, ambient temperature or residual battery life, ...).

For this purpose, certain sensors of traditional type will also be present that are necessary to exhaustive detecting of all the information that identifies the current conditions of the wall surface: the wall surface temperature 66, an ambient temperature sensor 67 and an ambient humidity sensor 68.

These sensors will be served by a suitable interface 69 that will act as a signal conditioner for the temperature of the wall seat, for ambient temperature and for ambient humidity, transmitting the data to the monitoring logic unit 27.

As mentioned above, the apparatus 200 is slightly intrusive in relation to the surface to which it is applied as two holes have to be applied into which to insert the electrodes 24, 25 that emerge from the resting base; another two small holes will be necessary to lock the sensor reliably on the application point. During the activation step, through the first and the second selectors 64, 65 a unique identification is defined that distinguishes the sensor from all the other fixed sensors possibly used in the same plant.

Definitively, the instrument for measuring wall humidity performs the following functions:

1. reading the electric capacity existing in the space present between the electrodes 24, 25;
2. reading ambient temperature by means of a thermistor with a conventional technique;
3. reading ambient humidity by means of a sensor and conventional technique;
4. reading the temperature of the wall surface with conventional techniques using a thermistor in intimate contact with the wall surface.

The device is able to carry out and update at regular intervals (for example once an hour) readings of the aforesaid physical parameters.

The transmitting/receiving module 30 is always active, waiting to be interrogated by the wall-dehumidifying apparatus 2.

Whenever the transmitting/receiving module 30 receives a call code that is equal to the identification code thereof, it transmits in sequence, and with a well defined protocol, the physical parameters detected thereby.

Obviously, the apparatus 200 can also operate independently with an inexistent or deactivated remote-mode module 30; through the display 61 and the functional keypad 62 with which it is provided it is in fact possible to display the collected physical parameters and to know, whenever it is necessary, the state of health of the wall surface to which it is applied.

The very low consumption of the apparatus 200 permits easy maintenance that is limited to replacing empty alkaline batteries 31.

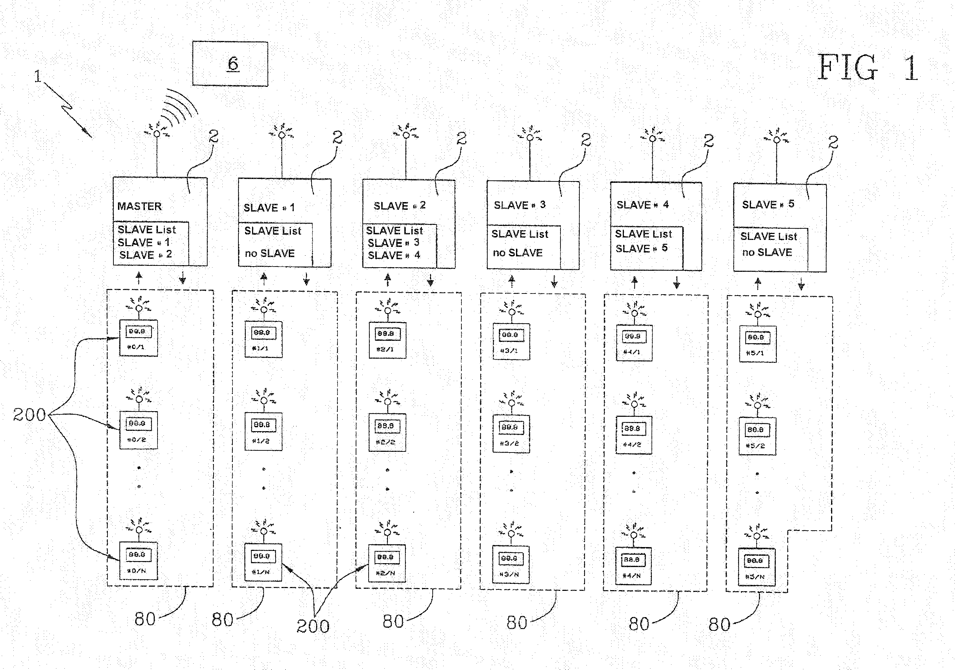

Now going on to consider figure 1, an example of a complex installation is noted in which as many as six apparatuses 2 are present for dehumidifying walls, each of which is able to gather data from N fixed humidity sensors 200 that are distributed suitably in a wall area of particular interest.

The apparatus 2 positioned furthest to the left (defined master or slave 0) gathers data, not only from the sensors 200 assigned thereto, but also from all the other dehumidifying apparatuses 2, slave 1, slave 2, all of which are controlled by N sensors 200 assigned thereto.

Of these two further apparatuses 2, the slave apparatus 2 gathers the data from a third and a fourth dehumidifying apparatus 2 (slave 3 and slave 4).

The latter gather data from some sensors 200 assigned thereto and the apparatus 2 known as a slave 4 also gathers data from the dehumidifying apparatus 2 known as a slave 5.

At the end of the entire scanning process, the master apparatus 2 will have gathered the data from all the fixed sensors 200, which data will be passed on to the master apparatus 2 by the slave apparatuses 2 that are cascade-connected.

Obviously, each slave apparatus 2 must be installed within the range of action of the apparatus 2 to which it is slaved.

Equally, each apparatus 200 for detecting wall humidity, has to be installed within the range of action of the dehumidifying apparatus 2 to which it is slaved.

In general, the apparatuses 2 will be connected to the mains supply and be earthed; the sensors 200 can be installed in the most suitable positions (provided that they are not immersed in water) and be supplied by battery to provide durability of at least 3 years. Returning to the example of figure 2, the apparatus 2 for dehumidifying walls will be provided with suitable selecting means 10 for setting the apparatus 2 as the master apparatus, or as the slave apparatus.

The master apparatus 2 communicates with one or more slave apparatuses 2 directly slaved thereto (for example, in figure 1 the master apparatus communicates with the slave apparatuses 1 and 2).

Further, each slave apparatus 2 can possibly communicate with one or more further slave apparatuses 2 that are directly slaved thereto.

In the example in figure 1 the slave apparatus 2 has no further slaved apparatus 2 whereas the slave apparatus 2 has the further slave apparatuses slaves 2, 3 and 4 slaved thereto.

As has then been previously mentioned, the system comprises a plurality of apparatuses 200 for detecting humidity, each comprising first selectors 63 for setting an assignment to a specific apparatus 2 for dehumidifying walls.

In particular, the apparatuses 200 communicate directly with the dehumidifying apparatus 2 to which they are slaved.

The apparatuses 200 also comprise second selectors 64 that define, inside an assignment group 80 of apparatuses 200 assigned to a single apparatus 2, an order of assignment.

In other words, the selecting means 10 of the dehumidifying apparatus 2 for dehumidifying walls enables a physical address to be assigned to the dehumidifying apparatus.

The "zero" address indicates that the unit is the master.

The master unit is the only unit that, through the remote communication module 5, dialogues with the remote supervision unit 6.

Through the keypad 71 and the display 70 the addresses of the slave units are input of which the reference unit will have to read the data coming from the fixed sensors 200 associated therewith.

One or more first-level slave units can be connected to the master unit.

One or more second-level slave units can be connected to each first-level slave unit and, one or more N+1 level slave units can be connected to each N level slave unit.

Each time that the master unit interrogates the first-level slave unit slaved thereto, the data accumulated thereby will be returned to the master unit.

In other words, the read data of the sensors 200 of the slave unit that are associated therewith and the data that the latter will have requested from the second level slave units and so on.

The radio traffic of each unit is asynchronous in relation to the other units; before starting communication with the sensors or units of a higher level, the unit will wait for the radio channel to be free.

For this purpose, a suitable customised communication protocol with error monitoring and correction features is implemented.

Each apparatus 2 is managed by a microcontroller 4, which, preferably by using wireless technology to conduct periodical scanning of the remote devices, records in an internal memory 7 the humidity data detected by the single remote sensors 200 together with the ambient humidity and temperature values.

Merely by means of example, hourly scanning is theoretically possible and for each scan the device will store a data vector of the type:

time; ambT; ambH; ID sensor 1+ humidity 1; ID sensor 2 + humidity 2; ...; ID sensor N+humidity N.

All the data that are thus recorded can be viewed and scanned locally through the use of the display/keypad applied to the body of the apparatus 2, or also be sent to a portable computer occasionally connected thereto, or transmitted via a telephone connection to a data gathering centre.

## Claims

1. System for dehumidifying walls comprising a plurality of apparatuses (2) for dehumidifying walls incorporating:

   - wall-dehumidifying means (3) that is active for promoting the dehumidification of at least a portion of wall; and
   - at least a monitoring unit (4) that is active on said wall-dehumidifying means (3) to enable operation to be monitored, **characterised in that** the apparatuses (2) for dehumidifying walls further comprise selecting means (10) for setting an apparatus (2) such as master and setting the other apparatuses (2) as slave apparatuses, the master apparatus (2) communicating with one or more slave apparatuses (2) directly slaved to the master apparatus (2).

2. System according to the preceding claim, **characterised in that** it further comprises a plurality of apparatuses (200) for detecting humidity, comprising selectors (63) for assigning to a specific apparatus (2) for dehumidifying walls, the apparatuses (200) communicating directly with the apparatus (2) for dehumidifying walls to which they are slaved.

3. System according to the preceding claim, **characterised in that** the apparatuses (200) for detecting humidity comprise second selectors (64) for defining an order of assignment inside an assignment group (80) of apparatuses (200) assigned to a single apparatus (2) for wall dehumidification.

4. System according to any of the preceding claims wherein one or more of said slave apparatuses (2) is configured to communicate with one or more further slave apparatuses (2) directly slaved to said slave apparatus (2).

5. System according to any of the preceding claims, **characterised in that** the master apparatus (2) receives the data detected by the apparatuses (200) for detecting humidity:

   - through successive communications between the master or slave apparatus (2) and the apparatuses (200) directly connected thereto,
   - through communications between each slave apparatus (2) and the possible slave apparatuses (2) slaved thereto and
   - through communications between the master apparatus (2) and the slave apparatuses (2) directly slaved thereto.

6. System according to any of the preceding claims wherein a radio channel is established for communication between said master and slave apparatuses (2) and said apparatuses (200) for detecting humidity.

7. System according to claim 6 wherein the radio traffic of each apparatus (2) is asynchronous with respect to the other apparatuses (2), so that before starting a communication with an apparatus (200) for detecting humidity or a communication with another apparatus (2) to which said apparatus (2) is slaved, said apparatus (2) waits for the radio channel to be free.

8. System according to any of the preceding claims wherein the monitoring unit (4) of each apparatus (2) by using wireless technology conducts periodical scanning of the remote apparatuses (200) for detecting humidity associated thereto and records in an internal memory (7) the humidity data detected by said remote apparatuses (200) together with the ambient temperature and ambient temperature values.

9. System according to any of the preceding claims, **characterised in that** the wall-dehumidifying means (3) is an electromagnetic dehumidification means and preferably comprises at least a solenoid valve traversed by current with a preset wave, amplitude and frequency form to spread in the surrounding environment an electromagnetic wave interacting with the humidity between the wall water to reduce the rising thereof by capillarity.

FIG 1

FIG 2

FIG 3

# FIG 3a

MENU
1 – New scan
2 – Resume scan
3 – Upload data onto PC
4 – ...............

FIG 3b

18

EP 2 535 782 A1

# FIG 3c

10us

20

"left" FLASH    <INFRARED SIGNAL>

22

500us

BURST
40KHz    RESPONSE FROM LEFT    ULTRASONIC
SIGNAL

30ms

21

"right" FLASH    <INFRARED SIGNAL>

23

500us

RESPONSE FROM RIGHT    ULTRASONIC
SIGNAL    BURST
40KHz

350ms

FIG 4

FIG 5

$$V_{out} = \pm \frac{V_{ref} \times \theta}{90°}$$

+Vref   −Vref

S

Vcc   Vca   Vcb

37   35   34   32   33   36   51

fo

FIG 5a

FIG 5b

Europäisches Patentamt

European Patent Office

Office européen des brevets

# EUROPEAN SEARCH REPORT

Application Number

EP 12 18 3815

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 7 173 538 B2 (PEDRAZA MARK A [US] ET AL) 6 February 2007 (2007-02-06)<br>* column 2, line 52 - column 10, line 25; figures 1,2 * | 1-9 | INV.<br>G05D22/02<br>E04B1/70<br>F26B25/22 |
| A | US 2006/217934 A1 (ARMSTRONG JAY T [US]) 28 September 2006 (2006-09-28)<br>* the whole document * | 1-9 | |
| A | WO 2006/016011 A (STUMPP BERNARD [FR]) 16 February 2006 (2006-02-16)<br>* the whole document * | 1-9 | |
| A,D | EP 0 928 856 A (BERGER HILDEGARD [DE]) 14 July 1999 (1999-07-14)<br>* the whole document * | 1-9 | |
| A | EP 0 736 639 A (BERGER HILDEGARD [DE]) 9 October 1996 (1996-10-09)<br>* the whole document * | 1-9 | TECHNICAL FIELDS SEARCHED (IPC)<br><br>E04B<br>F26B<br>G05D |

The present search report has been drawn up for all claims

| Place of search | Date of completion of the search | Examiner |
|---|---|---|
| Munich | 18 October 2012 | Burchielli, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 12 18 3815

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2012

| Patent document cited in search report | | Publication date | Patent family member(s) | | Publication date |
|---|---|---|---|---|---|
| US 7173538 | B2 | 06-02-2007 | US 2005285748 A1 | | 29-12-2005 |
| | | | US 2007103319 A1 | | 10-05-2007 |
| | | | US 2008249654 A1 | | 09-10-2008 |
| US 2006217934 | A1 | 28-09-2006 | NONE | | |
| WO 2006016011 | A | 16-02-2006 | AT 405710 T | | 15-09-2008 |
| | | | EP 1774113 A1 | | 18-04-2007 |
| | | | ES 2310750 T3 | | 16-01-2009 |
| | | | WO 2006016011 A1 | | 16-02-2006 |
| EP 0928856 | A | 14-07-1999 | AT 251700 T | | 15-10-2003 |
| | | | DE 19800597 A1 | | 22-07-1999 |
| | | | EP 0928856 A1 | | 14-07-1999 |
| | | | ES 2209249 T3 | | 16-06-2004 |
| EP 0736639 | A | 09-10-1996 | AT 204047 T | | 15-08-2001 |
| | | | EP 0736639 A1 | | 09-10-1996 |
| | | | ES 2161931 T3 | | 16-12-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 928856 A
- US 7173538 B